# FASCICULE DE BREVET EUROPEEN

(11) **EP 1 364 867 B1**
(45) Date de publication et mention de la délivrance du brevet: **13.09.2006**
(21) Numéro de dépôt: 03291206.5
(22) Date de dépôt: 21.05.2003
(51) Int. Cl.: B62L 1/14, B62L 3/02

(54) **Freins mécaniques à patins pour bicyclettes**
Mechanische Bremse mit Bremsschuh für Fahrräder
Mechanical brake with brake shoes for bicycle

(30) Priorité: 21.05.2002 FR 0206182
(43) Date de publication de la demande: 26.11.2003
(73) Titulaire: Look Cycle International, 58000 Nevers (FR)
(72) Inventeur: Peyre, Henri, 58270 Saint Benin d'Azy (FR)
(74) Mandataire: Laget, Jean-Loup

(56) Documents cités:
- FR-A- 536 488
- GB-A- 411 036
- GB-A- 566 034

## Description

La présente invention est du domaine des freins à patins sur jantes destinés à être montés sur des bicyclettes particulièrement sur des VTT. Une telle construction est visible dans GB 411 036A.

Les freins à patins sur jantes couramment utilisés sont animés soit par des systèmes hydrauliques, soit par des systèmes mécaniques. Les freins hydrauliques souvent très efficaces dans l'action de freinage présentent les inconvénients inhérents à tout système hydraulique : complexité des composants, vulnérabilité des circuits, surveillance de la réserve d'huile et prix élevé. Ils manquent également de progressivité dans le freinage. Les freins mécaniques à tirage par câbles et gaines perpendiculairement aux bras de freins ou transversalement à ceux-ci comportent deux bras de frein symétriques indépendants, axés sur les tourillons solidaires du vélo, ces bras sont maintenus et ramenés en positions initiales par des ressorts de torsion ou de flexion dont une extrémité est logée dans le tourillon. Ces ressorts sont fragiles et difficiles à remettre en place après un démontage du frein. Le réglage des patins de frein par rapport à la jante est délicat. Souvent dans l'action de freinage un patin touche la jante avant l'autre ce qui occasionne des vibrations, pendant le freinage les deux patins ne sont pas plaqués contre la jante avec la même force. Certains freins haut de gamme possèdent des systèmes d'applications parallèles des patins sur les jantes comportant des biellettes fragiles et encombrantes. Ces freins sont sensibles à la boue, les câbles et les gaines qui réunissent les bras de freins passant très prés du pneu. Les câbles de freins ne sont pas toujours montés suivant une même direction, ce qui occasionne des frottements et un mauvais rappel des patins en position de repos. Il faut démonter et manipuler ces freins avec précaution, les ressorts et les bagues de réglage n'étant solidarisés que par le montage sur le tourillon. Les pièces de ces freins sont différentes pour chaque bras. Si le freinage est efficace ces freins manquent de progressivité et par un effet de butée des patins contre les jantes un freinage prolongé fatigue les mains.

L'invention qui va être décrite se propose d'apporter des solutions aux inconvénients cités. Elle concerne pour le premier mode de réalisation un système de frein mécanique à patins comportant deux bras de frein identiques et réversibles, montés libres en rotation sur les tourillons, portant pour chaque bras à la partie haute une came creuse en vé percée en son milieu, l'angle du dièdre étant de 90° environ, l'arête bissectrice est horizontale, la came est ouverte vers l'extérieur, la fermeture du frein étant commandée par un arceau mobile dans un mouvement de rotation dont l'axe est parallèle à l'axe de rotation de la roue à partir de trous situés dans le secteur haut et central de l'arceau par l'action du câble de frein ou de la gaine reliés à la poignée de frein, l'arceau mobile étant relié du côté intérieur du bras, de façon démontable, par ses extrémités à des broches, dont les axes longitudinaux sont horizontaux quand le frein est au repos, portant des doigts de cames agissant dans des mouvements de rotation transmis par les broches contre les flancs des cames, les bras sont maintenus et ramenés en position de repos par des ressorts de compression métalliques placés autour des broches qui agissent pour éloigner transversalement au frein les bras de l'arceau mobile tout en plaquant les doigts de cames contre les cames, l'arceau mobile pouvant se déformer dans le sens de la largeur en cas de pression trop importante des patins contre la jante ; le frein composant un ensemble flottant aligné par rapport à l'axe de la roue par le câble de frein. L'axe longitudinal de l'arceau mobile forme un angle privilégié de 45° environ avec les axes longitudinaux des bras de frein. Cet angle peut être ajusté à la particularité d'un cadre quand les broches et l'arceau mobile sont pourvus de dents d'assemblage à pas fin. Par le jeu des bras de leviers donnés par les positions de la came et du patin sur le bras de frein par rapport à son axe de rotation sur le tourillon et par le jeu des bras de leviers de l'arceau mobile et du doigt de came la force à fournir sur la poignée de frein est faible, de plus la course de l'arceau est importante en action de freinage, ce qui donne une grande progressivité à celui-ci. L'arceau mobile est en matière plastique, sa section est calculée pour qu'il se déforme en s'ouvrant si la pression des patins contre la jante est trop importante, ce qui évite le blocage des roues. Le frein est retenu au milieu de l'arceau par le câble et il est stabilisé par deux ressorts de longueurs et de forces identiques ce qui donne un positionnement des bras à un même écartement de la jante. Le frein étant monté flottant et sans contrainte, en action de freinage les patins frottent de façons identiques contre la jante, ce qui améliore la tenue de la roue par rapport au sol. Le frein démonté forme un ensemble compact sans pièce qui se désolidarise. Les vis qui tiennent le frein sur les tourillons sont des vis à serrage manuel ou des vis quart de tour pour pouvoir changer rapidement une roue sans être gêné par les patins de frein. Les cheminements des câbles de frein et des gaines se font toujours suivant le plan médian du vélo.

Dans le deuxième mode de réalisation, le principe général de fonctionnement est le même. L'arceau mobile de commande est en trois parties : deux branches coudées en tige métallique et un manchon d'assemblage des branches, en métal léger ou en matière plastique. Ce manchon permet le réglage en écartement des bras de frein par rapport à la jante et le passage, l'orientation et l'immobilisation du câble de commande du frein. L'arceau mobile est réglable en hauteur par des vis solidaires des broches. Les patins de frein sont montés sur des porte-patins cylindriques permettant leur orientation automatique parallèlement à la jante et ils sont réglables en hauteur par rapport à la jante par des vis solidaires des bras de frein, ces trois particularités : réglage en écartement par le manchon, réglage en hauteur par les vis et orientation automatique des patins permettent de supprimer les bagues et les cuvettes de réglages qui sont montées sur les porte-patins traditionnels et de gagner du temps aux réglages des freins. Les broches portent des boutonnières pour le montage des doigts de came, ce qui évite des vis, permet une orientation du doigt de came par rapport aux flancs de la came pendant la phase de freinage et peut être un moyen, en l'enlevant, d'écartement rapide des patins de freins pour le passage d'une roue.

Dans le troisième mode de réalisation de l'invention le principe général de fonctionnement du frein est le même que celui du deuxième mode de réalisation. L'arête du dièdre de la came portée par le bras est verticale. Le doigt de came est le prolongement de l'arceau mobile en trois parties qui se présente verticalement quand le frein est au repos. Le manchon d'assemblage présente une partie plate déportée par rapport à l'axe longitudinal du manchon, ce qui permet le câble de frein étant relié à cette partie déportée, un réglage en continu de l'angle d'attaque de l'arceau mobile par rapport à l'axe vertical des bras. Les ressorts de rappel des bras sont en élastomère. Deux solutions pour l'orientation des axes longitudinaux des patins par rapport au plan de la jante sont proposées: une permanente par vis et une automatique par écrou porte- patin chanfreiné et rondelle élastique.

Dans le quatrième mode de réalisation de l'invention le principe général de fonctionnement, arceau mobile et commande par cames, est le même, les bras et les patins sont différents. Les bras de frein identiques et réversibles sont réunis à leur sommet par un arceau fixe qui peut se déformer dans le sens de la largeur, qui peut être en tige métallique ou en matière plastiquc. Le réglage en hauteur des bras est assuré par des tasseaux filetés montés sur les tourillons. Les cames ouvertes à environ 90° sont situées à l'intérieur des bras au niveau des patins de freins. Les broches commandées par l'arceau mobile portent les patins. Ces patins peuvent se présenter sous deux aspects : soit cylindriques, les liaisons entre les doigts de came qui sont les extrémités de l'arceau mobile et les broches se font aux niveaux des arêtes des dièdres des cames, soit normaux à déplacement rectiligne guidé, les doigts de came sont des pièces indépendantes et les liaisons entre les broches et l'arceau mobile se font à l'extérieur des bras. L'arceau mobile possède un galet de passage du câble de frein, celui-ci est arrêté par une pièce de liaison mobile au sommet et en son milieu de l'arceau fixe. L'arceau mobile est précontraint en écartement, c'est lui qui assure par son élasticité la tenue en place et le rappel des patins, dans l'action de freinage il se resserre en largeur.

Ce mode de réalisation peut être adapté à un frein à disque.

Il est possible de réaliser un frein en combinant les éléments des différents modes de réalisations.

Ces éléments peuvent correspondre avec une ou plusieurs des caractéristiques suivantes appliquées à des freins mécaniques à patins destinés notamment à être montés sur des bicyclettes, de préférence sur des vélos tout terrain, agissant pour le freinage par le frottement de patins :
- un arceau mobile en rotation dont l'axe du mouvement est parallèle à l'axe de rotation de la roue, arceau pouvant se déformer élastiquement dans le sens de la largeur, arceau activé à sa partie haute et centrale par l'action d'un câble ou d'une gaine reliés à la poignée de frein, arceau relié à chacune de ses extrémités de façon démontable à une broche recevant un doigt de came qui agit dans un mouvement de rotation transmis par la broche contre les flancs d'une came creuse percée d'un trou aménagé pour recevoir la broche, came creuse en vé dont l'angle plan du dièdre est d'environ 90°, commande dans son mouvement de rotation l'action des patins, le système de rappel élastique des patins étant situé au niveau des broches.
- chaque frein comporte deux bras identiques et réversibles montés tournant librement sur les tourillons, chacun des bras portant à sa partie haute une came creuse en vé percée perpendiculairement par rapport à l'axe longitudinal du bras d'un trou oblong et d'un lamage cylindrique, came qui est tournée vers l'extérieur du bras et dont l'arête bissectrice du dièdre est horizontale et l'angle plan d'environ 90°, la broche qui traverse la came par le trou oblong et le lamage cylindrique porte un doigt de came et est reliée à l'arceau mobile du côté intérieur du bras, les bras sont maintenus et ramenés en position de repos après une action de freinage par des ressorts de compression métalliques placés autour des broches, les bras sont montés tournant librement sur les tourillons de façon à ce que le frein en place constitue un ensemble flottant, sans contrainte, dont l'axe de symétrie suivant la vue de face est maintenue dans le plan de l'axe de symétrie en largeur de la roue par le câble de frein passant par un trou situé dans le secteur haut et central de l'arceau mobile quand le frein est au repos.
- chaque frein comporte deux bras identiques et réversibles montés tournant librement sur les tourillons, chacun des bras portant à sa partie haute une came creuse percée perpendiculairement par rapport à l'axe longitudinal du bras d'un trou oblong et d'un lamage cylindrique, came qui est tournée vers l'extéricur du bras et dont l'arête bissectrice du dièdre est verticale et l'angle plan d'environ 90°, la broche qui traverse la came porte côté extérieur au bras un doigt de came qui est une extrémité de la branche coudée de l'arceau mobile, les bras sont maintenus et ramenés en position de repos après une action de freinage par des ressorts en élastomère disposés autour des broches, logés en partie dans les lamages cylindriques, ces ressorts assurent également le positionnement des broches au milieu des trous oblongs dans le sens de la hauteur quand le frein est au repos par l'intermédiaire des lamages cylindriques , les bras sont montés tournant librement sur les tourillons de façon à ce que le frein en place constitue un ensemble flottant sans contrainte dont l'axe de symétrie suivant la vue de face est maintenu dans le plan de l'axe de symétrie en largeur de la roue par le câble de frein passant par un trou situé en position haute et centrale de l'arceau mobile quand le frein est au repos.
- les bras de freins identiques et réversibles sont montés sur les tourillons par des tasseaux réglables en hauteur, et sont reliés entre eux dans leur plan par un arceau en tige métallique ou en matière plastique, déformable élastiquement en largeur, chaque bras portant une came creuse en vé tournée vers l'intérieur du frein, l'arrête bissectrice du dièdre étant horizontale, l'angle plan étant d'environ 90°, came percée d'un trou perpendiculaire à l'axe longitudinal du bras dans lequel coulisse une broche de façon rectiligne, cette broche pouvant soit être munie à son extrémité filetée d'un patin cylindrique le doigt de came faisant partie de l'arceau mobile, soit être munie à son extrémité filetée d'un porte patin à déplacement rectiligne, le doigt de came étant indépendant, la commande du frein, le maintien en position et le rappel élastique des patins étant assuré par l'arceau mobile précontraint en largeur.
- l'arceau mobile de commande est en trois parties constituées de deux branches coudées en tige métallique reliées aux broches par des vis permettant un réglage en hauteur de l'arceau mobile par rapport à l'axe horizontal des broches et d'un manchon d'assemblage lié aux branches coudées par des vis solidaires du manchon perinettant un réglage en écartement des patins par rapport à la jante, un réglage de l'orientation du trou de passage du câble de frein et un réglage du positionnement angulaire du haut de l'arceau mobile dans le plan perpendiculaire à l'axe de rotation de la roue quand le manchon possède une partie plate déportée par rapport à son axe longitudinal, l'arceau mobile pouvant se déformer élastiquement si la pression entre les patins et la jante est trop importante.
- l'arceau mobile de commande est monobloc en matière plastique, de sections calculées pour pouvoir se déformer en s'ouvrant si la pression entre les patins et la jante devient trop importante, qu'il est muni dans chaque retombée d'un trou transversal de profil octogonal, pouvant être de profil denté, qui coopère avec la section octogonale ou dentée de la broche pour le positionnement de son axe longitudinal par rapport à ceux des bras selon le montage désiré, en ce qu'il possède deux trous pour le passage et l'immobilisation du câble dont le choix au montage du frein dépend de la course donnée par la poignée de frein, une vis de blocage étant prévue pour solidariser le câble à l'arceau mobile, celui-ci pouvant être taillé en forme de couteau destiné à racler la boue qui se colle sur le pneu.
- un patin creux monté sur un porte patin cylindrique permettant au patin une orientation automatique parallèlement à la jante, porte patin vissé à l'extrémité filetée arrondie d'une tige recevant une rondelle d'élastomère et un écrou de blocage, tige portée par un écrou rectangulaire guidé en translation par les côtés d'un évidemment du bras de frein est réglable en hauteur par rapport à la jante par une vis solidaire du bras de frein.
- l'écrou de chaque bras servant au réglage en hauteur du patin par rapport à la jante à l'aide de la vis a ses côtés en contact avec les côtés calibrés latéraux du bras chanfreinés et porte une partie arrière sortant à l'extérieur du bras, pourvue de vis de réglage afin d'obtenir un réglage permanent de l'axe longitudinal du patin d'environ 5° par rapport à la jante, ce réglage pouvant être automatique en cas de suppression de la partie.
- les doigts de cames peuvent être montés dans une boutonnière des broches, peuvent être articulés sur les broches, peuvent être munis de rouleaux.
- les bras de freins sont en matière plastique munis de fourrures métalliques portant les cames.
- le frein selon l'invention peut être adapté à un frein à disque.

D'autres caractéristiques et avantages de l'invention ressortiront de la description ci-dessous de plusieurs modes de réalisation de l'invention, cette description étant faite à titre d'exemple non limitatif en référence aux dessins annexés sur lesquels :
- La figure 1 représente une vue de face en coupe partielle suivant la ligne AA de la figure 2 d'un frein mécanique à patins en position de repos selon un premier mode de réalisation de l'invention.
- La figure 2 représente une vue de côté de la figure 1.
- La figure 3 représente une vue de face en coupe partielle suivant la ligne BB de la figure 4 du frein de la figure 1 en position active de freinage.
- La figure 4 représente une vue de côté de la figure 3.
- La figure 5 représente une vue de face en coupe partielle suivant la ligne CC de la figure 6 d'un frein mécanique à patins en position de repos selon un deuxième mode de réalisation de l'invention.
- La figure 6 représente une vue de côté de la figure 5.
- La figure 7 représente une vue de face en coupe partielle suivant la ligne DD de la figure 8 du frein de la figure 5 en position active de freinage.
- La figure 8 représente une vue de côté de la figure 7.
- La figure 9 représente une vue de face en coupe partielle suivant la ligne EE de la figure 10 d'un frein mécanique à patins en position de repos selon un troisième mode de réalisation de l'invention.
- La figure 10 représente une vue de côté de la figure 9.
- La figure 11 représente une section suivant la ligne FF de la figure 10.
- La figure 12 représente une vue de dessus en coupe suivant la ligne GG de la figure 9.
- La figure 13 représente en coupe longitudinale un doigt de came muni de rouleaux.
- La figure 14 représente un doigt de came monobloc tenu par vis.
- La figure 14 A représente un doigt de came monobloc tenu par boutonnière.
- La figure 15 représente en vue de côté un écrou de blocage de patin mobile.
- La figure 16 représente une vue de côté d'un VTT montrant les positions de montages des freins et les cheminements des câbles et des gaines.
- La figure 17 représente une vue de face en coupe partielle suivant la ligne HH de la figure 18 d'un frein mécanique à patins en position de repos selon un quatrième mode de réalisation de l'invention.
- La figure 18 représente une vue de côté de la figure 17.
- La figure 19 représente une vue de face en coupe suivant la ligne JJ de la figure 21 d'un porte- patin à déplacement rectiligne pouvant être monté sur le frein du quatrième mode de réalisation.
- La figure 20 représente le porte-patin de la figure 21 en coupe suivant la ligne II.
- La figure 21 représente une vue de côté de la figure 19.
- La figure 22 représente en vue de face un arceau mobile du premier mode de réalisation muni d'un couteau contre la boue.
- La figure 23 représente une vue de côté de la figure 22 en coupe suivant la ligne KK.
- La figure 24 représente une vue de face d'un bras du troisième mode de réalisation réalisé en matière plastique, muni d'une fourrure métallique.
- La figure 25 représente une vue de dessus de la figure 24 en coupe suivant la ligne LL.
- La figure 26 représente une vue de côté de la figure 24.
- La figure 27 représente une broche porte doigt de came du premier mode de réalisation.
- La figure 28 représente une vue de côté de la figure 27.
- La figure 29 représente en coupe longitudinale une broche munie d'un doigt de came articulé sur la broche.
- La figure 30 représente une vue de face en coupe suivant la ligne MM de la figure 31 d'un frein à disque issu du quatrième mode de réalisation.
- La figure 31 représente une vue de côté de la figure 30.
- La figure 32 représente l'arceau mobile de commande du frein des figures 30 et 31.

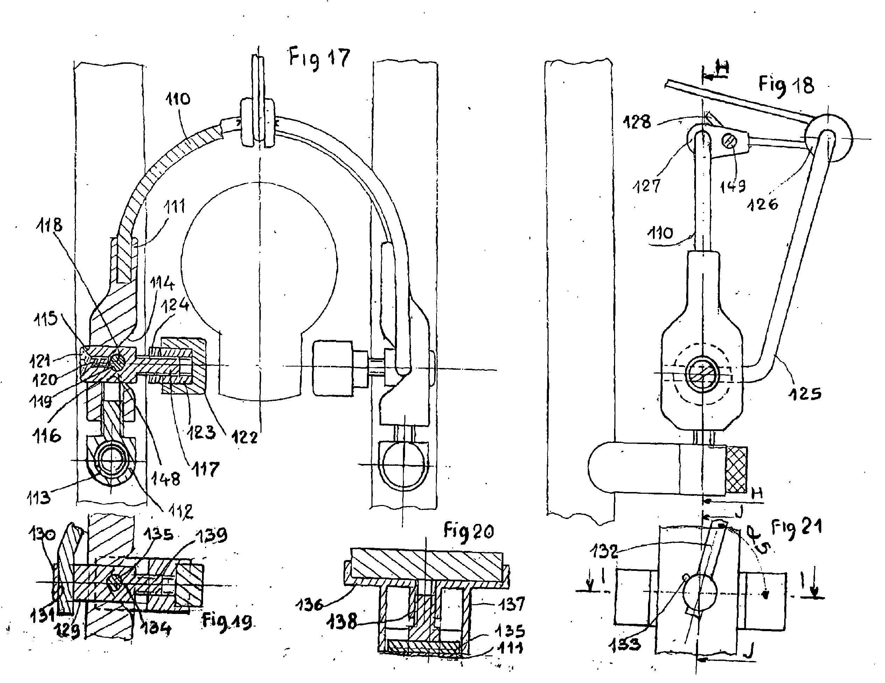

Les freins représentés pour tous les modes de réalisations sont montés pour la roue arrière, sauf pour la figure 16, pour une meilleure compréhension des dessins les haubans qui portent les tourillons sont dessinés verticaux.

Les figures de 1 à 4, 13, 14, 16, 22, 23, 27, 28, 29 décrivent le frein mécanique à patins du premier mode de réalisation.

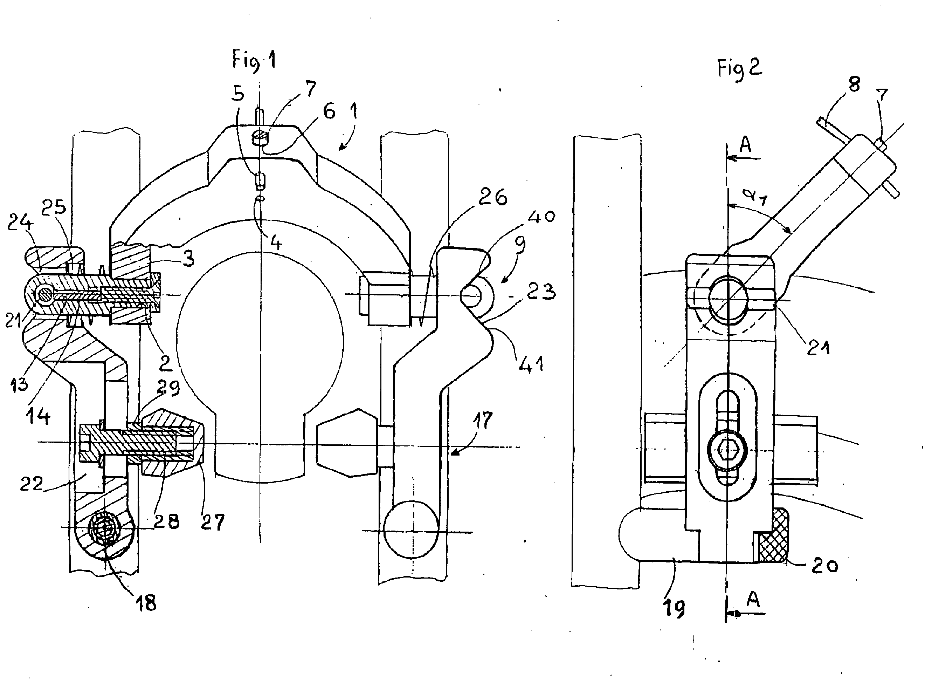

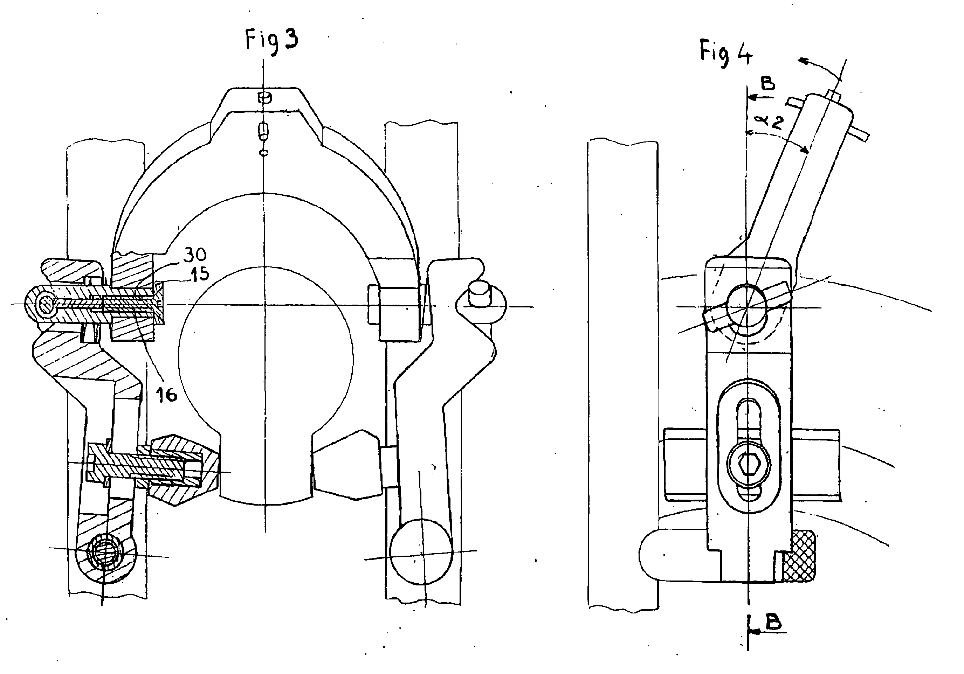

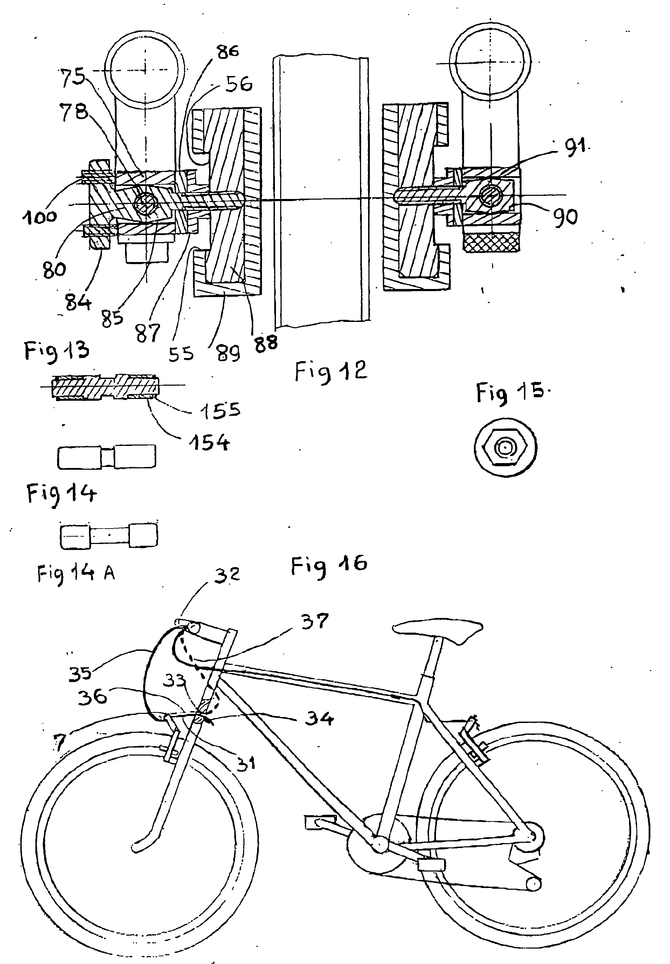

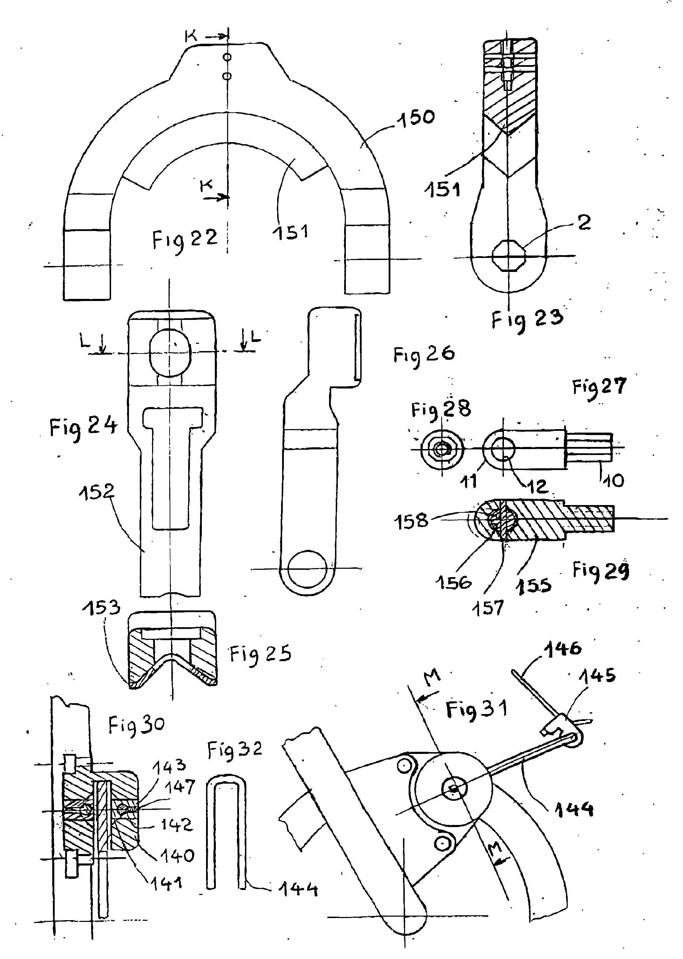

L'arceau mobile de commande 1 en matière plastique, de sections calculées pour pouvoir se déformer en s'ouvrant si la pression entre la jante et les patins de frein 27 est trop importante, est percé dans chaque retombée 3 d'un trou transversal 2 de section octogonale, fig 23. Deux trous 4 et 5 calibrés au diamètre des câbles de frein traversent la partie haute en son milieu de l'arceau 1. Un trou taraudé 6 perpendiculaire à 4 et 5 reçoit une vis de blocage 7 du câble de frein 8. Dans chaque trou 2 est montée une broche 9 qui porte un doigt de came 21. Cette broche 9 issue d'un cylindre est taillée à une extrémité du même octogone 10 que 2, ce qui permet de pouvoir positionner l'axe longitudinal de l'arceau 1 par rapport à ceux des bras 17 différemment selon le montage désiré, l'angle α 1 peut mesurer - 45°, 0°, + 45° ; l'autre extrémité de la broche 9 est taillée en forme de demi- boule 11, fig 27. Un trou 12 est percé suivant l'axe de 11, perpendiculairement à l'axe longitudinal de la broche 9, il est destiné à recevoir un doigt de came 21, soit monobloc, fig 14, soit équipé de rouleaux 154 arrêtés par des circlips 155, fig 13, permettant de réduire les frottements. Suivant l'axe longitudinal de 9 un trou lisse 13 débouche dans 12, il reçoit une tige 14 calibrée en longueur qui arrête le doigt de came en translation ; un trou taraudé 30 reçoit une vis de blocage 16 dont la tête repose contre une rondelle 15, fig 3. Les bras de frein 17 gauche et droit sont identiques et réversibles. Chaque bras est traversé à sa partie basse par un trou lisse 18 par lequel il est monté tournant librement sur le tourillon 19 quand la vis 20 est bloquée. Un évidemment 22 est creusé de façon connue pour recevoir la vis port-patin 28 qui maintient le patin 27 ainsi que les rondelles d'épaisseur et d'orientation 29. A la partie haute du bras est située une came 23, dont les flancs 40 et 41 forment un angle d'environ 90°, l'arête bissectrice du dièdre est horizontale, la came est tournée vers l'extérie du bras. Pour compenser les changements d'angles des flancs 40 et 41 donnés par le basculement du bras sur l'axe de 19, la valeur de l'angle du flanc 40 augmentant et celle du flanc 41 diminuant par rapport à l'axe de 9 qui reste horizontal pendant le mouvement, l'angle du flanc 41 est plus ouvert de 2° environ de façon à ce que le doigt 21 porte sur les deux flancs de came pendant le mouvement, ceci si la broche 9 est montée avec un doigt de came monobloc fig 14 ou à rouleaux fig 13, si la broche 9 reçoit un doigt de came articulé 158, fig 29 cette dissymétrie n'est pas nécessaire. Un trou oblong 24 dont l'axe est situé dans le plan de symétrie du bras 17 et symétrique par rapport à l'arête du dièdre traverse l'épaisseur de la came perpendiculairement par rapport à l'axe longitudinal du bras pour déboucher dans un lamage cylindrique 25 situé côté intérieur du bras. Un ressort de compression 26, dont une partie est logée à l'intérieur de 25 est monté autour de la broche 9, il prend appui contre le fond de 25 et contre l'extérieur de la retombée 3 de 1. Les ressorts 26 établissent une interaction entre l'arceau 1 et les bras 17 par l'intermédiaire des cames 23 et des doigt 21 des broches 9, ils maintiennent l'écartement des bras au repos et ramènent les bras et l'arceau mobile après une action de freinage. Au montage du frein suivant les figures 1 et 2 l'angle α 1 est de + 45° environ, pouvant grâce aux octogones 2 et 10 faire - 45° ou 0°, il est envisageable que 2 et 10 soient dotés de profils dentés, avec un angle de 20° entre deux dents de façon à pouvoir régler l'angle α 1 suivant un pas de 20°. Pour agir sur l'arceau mobile 1 et mettre le frein en action de freinage deux montages du câble et de la gaine sont possibles, illustrés par la figure 16, le frein considéré étant monté sur la fourche : soit le câble de frein 31 partant de la poignée de frein 32 passe librement par le trou 4 ou 5 de l'arceau 1, la vis de blocage 7 est desserrée, puis par le trou 33, situé dans la partie arrondie de la tête de fourche, a la sortie duquel il est arrêté par un serre câble 34, et c'est la gaine de frein 35 qui prenant appui contre l'arceau 1, le repousse vers l'arrière et met le frein en action de freinage, sur les vélos équipés de fourches télescopiques le câble de frein passe par le trou qui est situé à la partie haute de l'arceau de renfort des bras de fourche ; soit le câble 36, représenté en pointillé, partant de la poignée 32 passe par le trou 33, puis est arrêté dans un trou 4 ou 5 de l'arceau 1 par la vis 7, la gaine 37 représentée en pointillé fait un double coude et s'appuie contre l'arrière de la tête de fourche. Le frein arrière peut recevoir ces deux types de montages en utilisant le trou situé au milieu de la barrette des haubans. En fonction de la course donnée par la poignée de frein il faut choisir le trou 4 ou 5 de l'arceau mobile, le trou 5 sera préféré si la course est importante. Au repos les bras 17 doivent être au plus prés de la verticale. Les vis 20 sont à serrage manuel ou à vissage quart de tour pour pouvoir démonter le frein rapidement.

Le câble de frein 8 passe par le plan médian dans le sens de la largeur de l'arceau mobile 1 et par le plan médian du vélo, les ressorts 26 écartent également les bras 17 des retombées 3 de 1, le frein tout en restant flottant élastiquement est ainsi stabilisé dans le plan médian du vélo, sans contrainte. Quand l'arceau 1 pivote par la tension donnée au câble ou à la gaine, les doigts de came 21 entraînés en rotation par les broches 9 prennent appui contre les flancs 40 et 41 des cames 23 et forcent les bras 17 vers l'intérieur, les patins 27 frottent contre la jante, les ressorts 26 sont comprimés, l'angle α 1 se réduit à α 2. Grâce à la forme allongée des trous 24 les bras 17 ne sont pas gênés dans leurs mouvements par les broches 9. Le frein flottant élastiquement sans contrainte, les cames 23 étant pareillement sollicitées par les doigts 21 ces particularités font que même si les patins 27 n'ont pas un dépassement équivalent par rapport aux bras 17, au freinage l'ensemble s'auto- positionne et les patins frottent avec la même force contre la jante en donnant une bonne qualité de freinage sans nuire à la trajectoire du vélo. La déformation de l'arceau mobile, le jeu des bras de leviers de la cinématique et la course importante sans point dur demandée à la poignée de frein, permettent de bien maîtriser le freinage, sans effort.

Les figures de 5 à 8, 14A et 16 décrivent le deuxième mode de réalisation de l'invention.

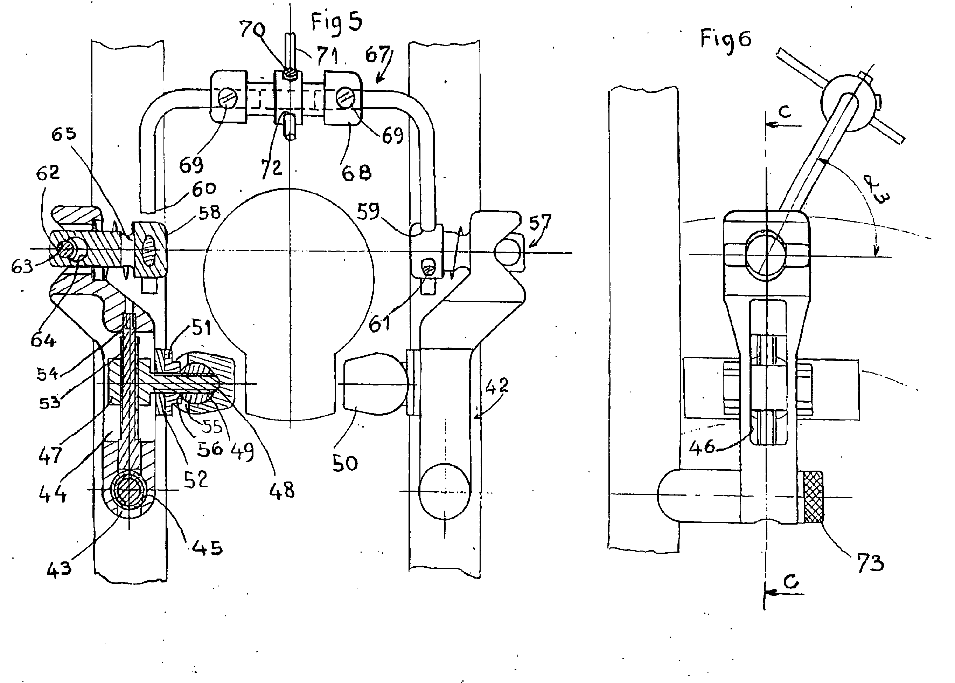

Le bras de frein 42 présente une configuration proche de celle du bras 17. Un trou étagé 43 débouchant et vertical est situé dans le plan de symétrie du bras vu de côté, fig 6, et dans le plan de symétrie vertical du trou 45, fig 5. Le bras est monté sur le tourillon par le trou 45, tournant librement sans contrainte. L'évidement 44, sans paroi, est calibré en largeur sur ses deux côtés 46. Le système porte- patin comprend : un écrou rectangulaire 47 guidé en translation par les côtés 46, portant côté intérieur en son milieu une tige filetée 48 à extrémité arrondie ; une vis 53 comportant trois diamètres décroissants, les extrémités logées dans le trou 43 sont lisses, la partie haute porte une empreinte 54 pour clé hexagonale ; une rondelle en élastomère 52 destinée à freiner le système vis écrou et à rattraper les jeux ; un écrou de blocage 51 ; un porte patin cylindrique 49 muni d'un méplat de contact 56 ; un patin creux 50 échancré 55 pour permettre de serrer l'écrou 51, fig 12. Pour monter le patin : mettre la rondelle 52 sur la tige 48 ; visser l'écrou 51 sur 48 ; enfiler le patin 50 sur le porte- patin 49, la paroi qui ferme le patin à une extrémité doit être positionnée vers l'arrière de la roue ; visser le porte- patin 49 sur 48, l'extrémité arrondie de 48 doit pousser contre le patin de façon à construire un arrêt en translation du patin et un système de came élastique en rotation pour ramener le patin à l'horizontale quand le frein est au repos ; bloquer l'écrou 51 contre le méplat 56 en prenant soin de conserver l'axe longitudinal du patin à l'horizontale ; présenter l'écrou 47 à l'intérieur de l'évidement 44 ; monter la vis 53 par le trou 43 ; assembler en tournant la vis 53. Quand le bras est monté sur le tourillon, la vis 53 est arrêtée en translation en haut par un changement de section de 43 et en bas par la génératrice du tourillon. La broche 57 est dotée d'une tête 58 qui est percée d'un trou 59 transversalement sur l'axe longitudinal, dans lequel est maintenue par la vis 61 la branche coudée 60 de l'arceau mobile 67 ce qui permet à celui-ci d'être réglable en hauteur. Une boutonnière issue de deux trous sécants 62 et 64 traverse la broche à l'opposé de la tête 58, les axes longitudinaux de 62 et 64 forment un angle α 3 d'environ 60° avec l'axe longitudinal du trou 59, fig 6. Un trou 65 est percé perpendiculairement aux axes longitudinaux de 62 et 64, contre la tête 58, il sert au passage de la clé de réglage de la vis 53. Un doigt de came 63, fig 14A, est placé dans la boutonnière, ce montage autorise au doigt une liberté angulaire par rapport à l'axe longitudinal de la broche 57 et lui permet par un léger basculement dans la boutonnière s'il est besoin de plaquer également contre les flancs de la came pendant le mouvement de basculement du bras, sans dissymétrie des angles des flancs de la cames comme il a été expliqué au premier mode de réalisation. La position de la came sur le bras, le trou oblong, le lamage cylindrique et le ressort sont identiques à ceux décrits au premier mode de réalisation. L'arceau mobile 67 de commande du frein est en trois parties : deux branches coudées 60 en tige métallique et un manchon de réglage 68. Ce manchon 68 possède en son milieu un trou transversal 72 à la dimension du câble de frein 71, une vis 70 peut être utilisée pour immobiliser le câble sur le manchon. Deux vis 69 situées transversalement à chaque extrémité du manchon servent à immobiliser les branches 60 sur le manchon 68.

Le fonctionnement général du frein est celui décrit au premier mode de réalisation. Le réglage en hauteur de l'arceau mobile 67 par rapport à l'axe horizontal des broches 57 s'effectue à l'aide des vis 61, il est utile pour s'adapter à la course du câble donnée par la poignée de frein. Le réglage en écartement des patins 50 par rapport à la jante et l'orientation du trou de passage 72 par rapport au câble s'effectuent à l'aide des vis 69 du manchon 68. Le réglage en hauteur des patins 50 par rapport à la jante s'effectue à l'aide des vis 53. La face de contact des patins 50 sur la jante est toujours parallèle à celle-ci grâce au montage des patins 50 sur les porte-patins cylindriques 49. Si la pression des patins 50 contre la jante est trop importante les branches 60 s'ouvrent élastiquement pour éviter le blocage des roues. Le démontage rapide du frein pour le passage de la roue s'effectue par les vis manuelles 73, il est possible également d'utiliser une vis 69 du manchon 58 pour écarter rapidement les patins 50 de la jante. Les bras 42 sont montés tournant librement sur les tourillons de façon à ce que le frein en place constitue un ensemble flottant sans contrainte, dont l'axe de symétrie suivant la vue de face, fig 5, est maintenu dans le plan de symétrie en largeur de la roue par le câble de frein 71 passant par le trou 72 situé en position haute et centrale de l'arceau mobile 67 quand le frein est au repos.

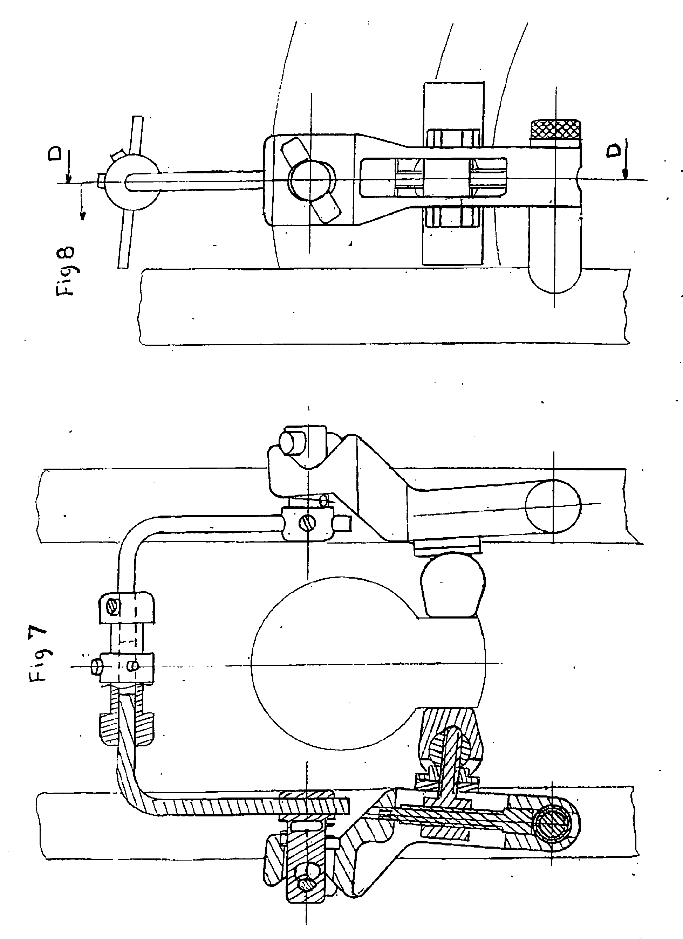

Les figures 7 et 8 montrent le frein en action de freinage.

Les figures de 9 à 12 et 16 décrivent le troisième mode de réalisation de l'invention.

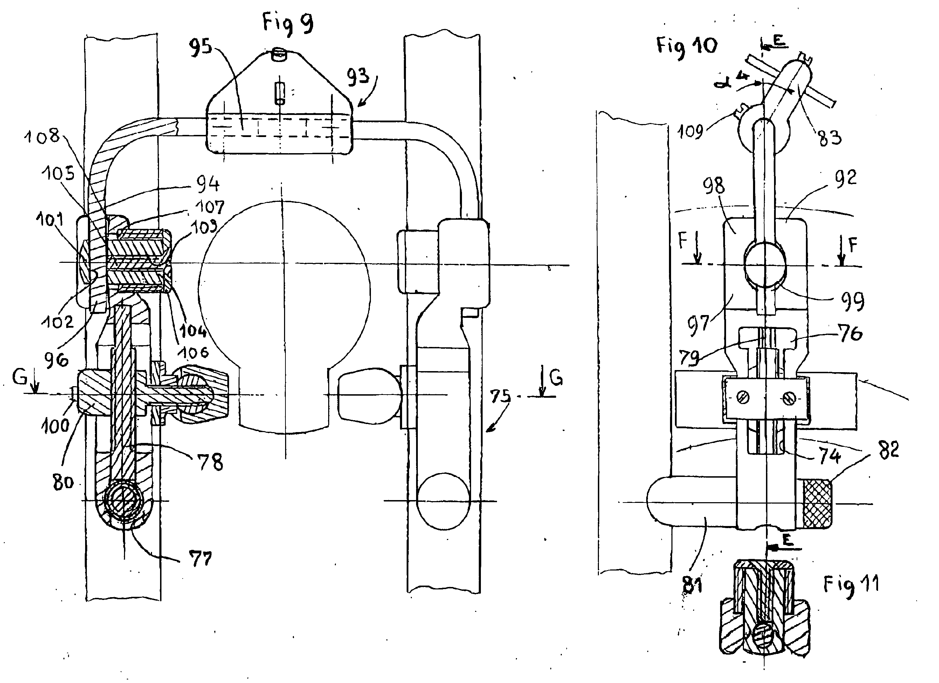

Les bras de freins 75 sont identiques et réversibles. Chaque bras 75 est monté sur le tourillon 81 tournant librement sans contrainte, il est maintenu par la vis à serrage manuel 82. Un trou étagé borgne 77 est percé suivant l'axe longitudinal de la partie inférieure du bras. La vis 78 de réglage en hauteur du patin présente deux parties cylindriques lisses aux extrémités qui se logent dans le trou étagé 77, en regard de la barre du té de l'ouverture 76 du bras 75 une partie de la vis porte un hexagone 79 de manoeuvre de la vis. L'ouverture 76 en té située de part et d'autre du plan de symétrie du bras en vue de côté, fig 10, a ses côtés 74 calibrés en largeur. L'écrou de réglage 80 en hauteur des patins qui coopère avec la vis 78 peut se présenter suivant deux réalisations. Pour la première réalisation portée par le bras gauche suivant les fig 9, 10 et 12, l'écrou 80 possède une partie arrière 84 qui sort à l'extérieure du bras 75, les côtés 85 de 80 sont chanfreinés pour permettre, grâce aux vis 100 portées par 84 qui s'appuient contre l'arrière des bras 75 un réglage permanent d'environ 5° de l'axe longitudinal du patin 89 par rapport au plan de la jante; la rondelle d'élastomère 86, l'écrou de blocage 87, le porte-patin 88 et le patin 89 sont identiques à ceux décrits au deuxième mode de réalisation. Pour la deuxième réalisation portée par le bras droit suivant les fig 9 et 12, les côtés 91 de l'écrou 90 sont chanfreinés pour permettre un débattement élastique d'environ 5° de l'axe longitudinal du patin par rapport au plan de la jante, la rondelle d'élastomère fait office de ressort de rappel. Le système porté par le bras gauche est un réglage d'angle permanent, celui porté par le bras droit est un alignement automatique du plan de contact du patin avec celui de la jante. La came 92 placée à la partie haute est tournée vers l'extérieur du bras, l'arête bissectrice du dièdre est verticale, l'angle plan est de 90° environ, fig 11. L'arceau mobile 93 est en trois parties : deux branches coudées 94 en tige métallique ronde, qui se terminent en doigts de cames 96 et traversent les broches101 côtés extérieurs aux bras, et un manchon d'assemblage 95. Pour que le doigt de came 96 porte bien contre les ailes de la came 92 en cours d'action de freinage et pour compenser l'inclinaison prise par l'arête du dièdre quand le bras de frein 75 pivote vers l'intérieur, l'angle d'ouverture du dièdre est supérieur d'environ 4° dans la partie basse 97 de la came que dans la partie haute 98, cet angle étant d'environ 90° dans cette partie, pour éviter un talonnage du doigt de came contre l'arête 108 celle-ci est légèrement courbe. Un trou oblong 99 traverse l'arrière de la came perpendiculairement à l'axe longitudinal du bras, il débouche dans un lamage cylindrique 107. La broche 101 est traversée perpendiculairement par un trou 102 qui reçoit le doigt de came 96 et axialement par un trou taraudé 103. Un ressort en élastomère 104 disposé autour de la broche 101 assure trois fonctions : il fait office de ressort de maintien et de rappel des bras après une action de freinage en plaquant le doigt de came 96 porté par la branche coudée 94 contre la came, par son engagement dans le lamage 107 il positionne la broche 101 au milieu de l'oblong 99 quand le frein est au repos, et il freine la vis de blocage 105 en permettant à celle-ci d'immobiliser le doigt 96 sur la broche tout en plaquant la rondelle 106. Le manchon 95 est nanti d'une partie plate déportée 83 par rapport à son axe longitudinal de façon à posséder un réglage du positionnement angulaire du haut de l'arceau mobile dans le plan perpendiculaire à l'axe de rotation de la roue en faisant varier l'angle α 4 par les vis 109 pour un montage optimum du frein sur le vélo. Les bras 75 sont montés tournant librement sur les tourillons 81 de façon à ce que le frein en place constitue un ensemble flottant sans contrainte dont l'axe de symétrie suivant la vue de face, fig 9, est maintenu dans le plan de l'axe de symétrie en largeur de la roue par le câble de frein passant par un trou situé en position haute et centrale de l'arceau mobile 93 quand le frein est au repos.

Le fonctionnement général du frein est celui décrit précédemment.

Les figures de 17 à 21 décrivent un quatrième mode de réalisation de l'invention.

Le frein comporte deux bras 111 identiques et réversibles dans lesquels sont vissés à la partie basse deux tasseaux 112 montés tournant librement en rotation par les alésages 113 sur les tourillons. Les bras de frein 111 sont reliés entre eux dans leur plan par un arceau 110, maintenu par collage, sertissage ou par des vis, en tige métallique qui peut se déformer en largeur, les bras tournant légèrement sur les tourillons, si un patin touche la jante avant l'autre et en cas de pression trop importante entre les patins et la jante pour éviter un blocage de la roue, cet arceau peut être également en matière plastique. Pour régler les patins de freins 122 en hauteur par rapport à la jante il faut jouer sur le vissage des tasseaux 112 dans les bras 111 avant le montage du frein sur les tourillons. Les cames en vé 114 sont portées par les bras 111, l'angle plan du dièdre est d'environ 90°, l'arête bissectrice horizontale du dièdre est située au niveau de la jante quand le frein est monté, elles sont tournées vers l'intérieur du frein, elles sont traversées chacune d'un trou cylindrique 148 dans lequel coulisse de façon rectiligne la broche 115 perpendiculairement par rapport au bras. Deux réalisations de patins, de porte-patins, de broches et d'arceaux mobiles sont présentées. Pour la première réalisation fig 17 et 18, la broche 115 composée d'une partie cylindrique lisse 116 et d'une extrémité filetée 117, porte un trou transversal 118 qui reçoit le doigt de came 119 partie intégrante de l'arceau mobile 125 et un trou fileté longitudinal 120 qui reçoit la vis d'immobilisation 121. Un patin de frein cylindrique 122 muni d'un insert taraudé 123 est vissé sur 117, il est immobilisé par l'écrou de blocage 124. Ce patin cylindrique convient pour des vélos d'enfants. L'arceau mobile 125 coudé est précontraint élastiquement dans le sens de la largeur, il sert de commande du frein, de maintien en position et de rappel élastique des patins. Un galet 126 est arrêté en translation au milieu de 125. Le câble de frein 128 est solidaire de l'arceau 110 par une pièce mobile de liaison 127, il est arrêté sur celle-ci par la vis 149. Pour la deuxième réalisation, fig 19 20 et 21, qui présente des patins traditionnels, la broche 129 porte une partie cylindrique 130 qui dépasse à l'extérieur du bras 111 et qui est traversée d'un trou 131 dans lequel est immobilisée une extrémité de l'arceau mobile 132 à l'extérieur du bras par la vis 133. Un trou transversal 134 dont l'axe longitudinal fait un angle α 5 d'environ 75° avec celui du trou 131 reçoit un doigt de came 135 indépendant, emmanché en force. Le porte-patin 136 présente une partie taraudée 138 à son arrière milieu et deux ailes 137 qui ont un écartement égal à la largeur du bras 111 à hauteur des cames 114 et qui servent de guidage en translation au porte-patin 136 pour que celui-ci ne tourne pas sur lui-même en action de freinage. Le réglage en écartement des patins s'effectue avant montage par le vissage de 138 sur 139. Pendant le fonctionnement du frein 139 tourne dans 138. L'arceau mobile 132 est précontraint élastiquement en largeur pour assurer le maintient et le rappel élastique des patins en plaquant les doigts de cames 135 contre les cames 114. Pendant l'action de freinage les arceaux 125 et 132 se resserrent en largeur.

Les figures de 30 à 32 décrivent le frein du quatrième mode de réalisation adapté à un frein à disque. Le corps de frein 140 est fendu pour laissé passer le disque, il porte les cames 141. Un alésage 142 reçoit les broches 143 . L'arceau mobile de commande 144 sert également de doigts de cames, il est maintenu sur les broches par les vis 147, il est précontraint élastiquement en largeur pour servir de ressort de rappel des broches, il est raccordé au câble de frein 146 par une pièce mobile en rotation 145.

Les figures 22 et 23 décrivent un arceau mobile 150 taillé en forme de couteau 151 destiné à racler la boue qui se colle sur le pneu, il est prévu pour être monté sur le frein du premier mode de réalisation.

Les bras de frein décrits dans les trois premiers modes de réalisations sont en métal léger, il est envisageable comme ces bras ne supportent aucun taraudage ni rivet de les réaliser en matière plastique 152 munis d'une fourrure métallique 153 à l'endroit des cames, fig 24, 25 et 26.

La figure 13 représente en coupe longitudinale un doigt de came muni de rouleaux 154, tenus par des circlips 155, destinés à diminuer les frottements. Le principe convient aux deux premiers modes de réalisations.

Les doigts de cames ne portant que sur une partie des flancs pendant l'action de freinage il est possible en cas d'usure des cames d'intervertir les bras sur les tourillons, pour les trois premiers mode de réalisations et de retourner le frein pour le quatrième.

L'intérêt industriel de l'invention est la fabrication d'un frein performant comportant des pièces identiques pour les deux bras. Les bras pouvant être en matière plastique. Les réglages des patins étant simples ce système de frein est intéressant pour les vélos de location. Il peut personnaliser une marque de cycles, actuellement les VTT sont équipés pour la plupart de freins identiques issus d'une seule marque de composants.

## Revendications

1. Freins mécaniques à patins destinés à être montés sur des bicyclettes, de préférence sur des vélos tout terrain, agissant pour le freinage par le frottement de patins, **caractérisés en ce qu'**un arceau mobile en rotation (1, 67, 93, 110, 125, 132, 144 ) dont l'axe du mouvement est parallèle à l'axe de rotation de la roue, arceau pouvant se déformer èlastiquement dans le sens de la largeur, arceau activé à sa partie haute et centrale par l'action d'un câble (8, 36, 71, 128, 146) et d'une gaine (35) reliés à la poignée de frein (32), arceau relié à chacune de ses extrémités de façon démontable à une broche (9, 57, 101, 115, 129, 143) recevant un doigt de came (21, 63, 96, 119, 135) qui agit dans un mouvement de rotation transmis par la broche contre les flancs (40, 41, 97, 98) d'une came creuse (23, 92, 114, 141) percée d'un trou aménagé (24, 99, 142, 148) pour recevoir la broche (9, 57, 101, 115, 129, 143), came creuse en vé dont l'angle plan du dièdre est d'environ 90°, commande dans son mouvement de rotation l'action des patins, le système de rappel élastique (26, 104, 125, 132, 144) des patins étant situé au niveau des broches (9, 57, 101, 115 ,129, 143).

2. Freins mécaniques selon la revendication 1 destinés à être montés sur des bicyclettes **caractérisés en ce que** chaque frein comporte deux bras identiques et réversibles (17, 42) montés tournant librement sur des tourillons (19), chacun des bras portant à sa partie haute la came creuse en vé (23) percée perpendiculairement par rapport à l'axe longitudinal du bras d'un trou oblong (24) et d'un lamage cylindrique (25), came (23) qui est tournée vers l'extérieur du bras (17, 42) et dont l'arête bissectrice du dièdre est horizontale et l'angle plan d'environ 90°, la broche (9, 57) qui traverse la came (23) par le trou oblong (24) et le lamage cylindrique (25) porte un doigt de came (21, 63) et est reliée à l'arceau mobile (1, 67) du côté intérieur du bras, les bras (17, 42) sont maintenus et ramenés en position de repos (fig 1 et 2, fig 5 et 6) après une action de freinage (fig 3 et 4, fig 7 et 8) par des ressorts de compression métalliques (26) placés autour des broches (9, 57), les bras (17, 42) sont montés tournant librement sur les tourillons de façon à ce que le frein en place constitue un ensemble flottant, sans contrainte, dont l'axe de symétrie suivant la vue de face (fig 1, fig 5) est maintenue dans le plan de l'axe de symétrie en largeur de la roue par le câble de frein (8, 71) passant par un trou (4, 5, 72) situé dans le secteur haut et central de l'arceau mobile (1, 67), quand le frein est au repos (fig 1, fig 5).

3. Freins mécaniques selon la revendication 1 destinés à être montés sur des bicyclettes **caractérisé en ce que** chaque frein comporte deux bras identiques et réversibles (75) montés tournant librement sur des tourillons (81 ), chacun des bras (75) portant à sa partie haute la came creuse (92) percée perpendiculairement par rapport à l'axe longitudinal du bras d'un trou oblong (99 ) et d'un lamage cylindrique (107), came (92) qui est tournée vers l'extérieur du bras et dont l'arête bissectrice du dièdre est verticale et l'angle plan d'environ 90°, la broche (101) qui traverse la came (92) porte côté extérieur au bras (75) un doigt de came (96) qui est une extrémité de la branche coudée (94) de l'arceau mobile (93), les bras (75) sont maintenus et ramenés en position de repos après une action de freinage par des ressorts en élastomère (104) disposés autour des broches (101), logés en partie dans les lamages cylindriques (107), ces ressorts (104) assurent également le positionnement des broches (101) au milieu des trous oblongs (99) dans le sens de la hauteur quand le frein est au repos par l'intermédiaire des lamages cylindriques (107), les bras (75) sont montés tournant librement sur les tourillons (81) de façon à ce que le frein en place constitue un ensemble flottant sans contrainte dont l'axe de symétrie suivant la vue de face (fig 9) est maintenu dans le plan de l'axe de symétrie en largeur de la roue par le câble de frein passant par un trou situé en position haute et centrale de l'arceau mobile (93) quand le frein est au repos (fig 9).

4. Freins mécaniques selon la revendication destinés à être monté sur des bicyclettes **caractérisés en ce que** des bras de freins (111) identiques et réversibles sont montés sur des tourillons par des tasseaux (112) réglables en hauteur, et sont reliés entre eux dans leur plan par l'arceau (110) en tige métallique ou en matière plastique, déformable élastiquement en largeur, chaque bras (111) portant la came creuse en vé (114) tournée vers l'intérieur du frein, l'arrête bissectrice du dièdre étant horizontale, l'angle plan étant d'environ 90°, came (114) percée d'un trou (148 ) perpendiculaire à l'axe longitudinal du bras (111) dans lequel coulisse une broche (115, 129) de façon rectiligne, cette broche pouvant soit (115) être munie à son extrémité filetée (117) d'un patin cylindrique (122) le doigt de came (119) faisant partie de l'arceau mobile (125), soit (129) être munie à son extrémité filetée (139) d'un porte patin (136) à déplacement rectiligne, le doigt de came (135) étant indépendant, la commande du frein, le maintien en position et le rappel élastique des patins étant assuré par l'arceau mobile (125, 132) précontraint en largeur.

5. Freins mécaniques selon les revendications 1, 2, 3 destinés à être montés sur des bicyclettes , **caractérisés en ce que** l'arceau mobile de commande (67, 93) est en trois parties constituées de deux branches coudées (60, 94) en tige métallique reliées aux broches (57, 101) par des vis (61, 105) permettant un réglage en hauteur de l'arceau mobile (67, 93) par rapport à l'axe horizontal des broches (57, 101) et d'un manchon d'assemblage (68, 95) lié aux branches coudées par des vis (69, 109) solidaires du manchon (68, 95) permettant un réglage en écartement des patins (50, 89) par rapport à la jante, un réglage de l'orientation du trou de passage (72) du câble de frein (71) et un réglage du positionnement angulaire du haut de l'arceau mobile dans le plan perpendiculaire à l'axe de rotation de la roue quand le manchon (95) possède une partie plate déportée (83) par rapport à son axe longitudinal, l'arceau mobile (67, 93) pouvant se déformer élastiquement si la pression entre les patins et la jante est trop importante.

6. Freins mécaniques selon les revendications 1 et 2 destinés à être montés sur des bicyclettes **caractérisés en ce que** l'arceau mobile de commande (1) est monobloc en matière plastique, de sections calculées pour pouvoir se déformer en s'ouvrant si la pression entre les patins (27) et la jante devient trop importante, qu'il est muni dans chaque retombée (3) d'un trou transversal de profil octogonal (2), pouvant être de profil denté, qui coopère avec la section octogonale (10 ) ou dentée de la broche (9) pour le positionnement de son axe longitudinal par rapport à ceux des bras (17) selon le montage désiré (α1, fig 2), **en ce qu'**il possède deux trous (4, 5) pour le passage et l'immobilisation du câble dont le choix au montage du frein dépend de la course donnée par la poignée de frein, une vis de blocage (7) étant prévue pour solidariser le câble (8) à l'arceau mobile (1), celui-ci (150) pouvant être taillé en forme de couteau (151) destiné à racler la boue qui se colle sur le pneu.

7. Freins mécaniques selon les revendications 1, 2, 3, 5 destinés à être montés sur des bicyclettes **caractérisés en ce qu**'un patin creux (50, 89) monté sur un porte patin cylindrique (49, 88) permettant au patin (50, 89) une orientation automatique parallèlement à la jante, porte patin (49, 88) vissé à l'extrémité filetée (48) arrondie d'une tige recevant une rondelle d'élastomère (52) et un écrou de blocage (51), tige portée par un écrou rectangulaire (47, 80) guidé en translation par les côtés (46) d'un évidemment (44) du bras de frein (42 ) est réglable en hauteur par rapport à la jante par une vis (53, 78) solidaire du bras de frein (42, 75).

8. Freins mécaniques selon les revendications 1, 2, 3, 5, 7 destinés à être montés sur des bicyclettes **caractérisés en ce que** l'écrou (80) de chaque bras (75 ) servant au réglage en hauteur du patin (89 ) par rapport à la jante à l'aide de la vis (78) a ses côtés (85 ) en contact avec les côtés calibrés latéraux (74) du bras (75) chanfreinés et porte une partie arrière (84 ) sortant à l'extérieur du bras, pourvue de vis de réglage (100) afin d'obtenir un réglage permanent de l'axe longitudinal du patin (89) d'environ 5° par rapport à la jante, ce réglage pouvant être automatique en cas de suppression de la partie (90).

9. Freins mécaniques selon l'une quelconque des revendications destinés à être montés sur des bicyclettes **caractérisés en ce que** les doigts de cames peuvent être montés dans une boutonnière (62, 64) des broches (57), peuvent être articulés (158) sur les broches (155, fig 29), peuvent être munis de rouleaux (154, fig 13).

10. Freins mécanique selon l'une quelconque des revendications destinés à être montés sur des bicyclettes **caractérisés en ce que** les bras de freins (152) sont en matière plastique munis de fourrures métalliques (153) portant les cames.

11. Freins mécaniques selon la revendications 4 destinés à être montés sur des bicyclettes **caractérisés en ce que** le frein est adapté à un frein à disque.

## Claims

1. Mechanical brakes with pads adapted to be mounted on bicycles, preferably on all terrain bicycles, acting to brake by friction of the pads, **characterised in that** an arch movable in rotation (1, 67, 93, 110, 125, 132, 144) whose axis of movement is parallel to the axis of rotation of the wheel, the arch being adapted to deform resiliently in the direction of its width, the arch being activated at its upper and central portion by the action of a cable (8, 36, 71, 128, 146) and a sleeve (35) connected to the brake handle (32), arch connected at each of its ends disassembleably to a pin (9, 57, 101, 115, 129, 143) receiving a cam finger (21, 63, 96, 119, 135) which acts with a movement of rotation transmitted by the pin against the flanks (40, 41, 97, 98) of a hollow cam (23, 92, 114, 141) pierced by a hole (24, 99, 142, 148) provided to receive the pin (9, 57, 101, 115, 129, 143), V-shaped hollow cam whose flat angle of the dihedral is about 90°, controls by its movement of rotation the action of the pads, the resilient return system (26, 104, 125, 132, 144) of the pads being located at the level of the pins (9, 57, 101, 115, 129, 143).

2. Mechanical brakes according to claim 1 adapted to be mounted on bicycles, **characterised in that** each brake comprises two identical and reversible arms (17, 42) mounted freely turnably on trunnions (19), each of the arms carrying at its upper portion a hollow V-shaped cam (23) pierced perpendicularly relative to the longitudinal axis of the arm by an oblong hole (24) and a cylindrical recess (25), cam (23) which is turned outwardly of the arm (17, 42) and whose ridge bisecting the dihedral is horizontal and the flat angle of about 90°, the pin (9, 57) which passes through the cam (23) through the oblong hole (24) and the cylindrical recess (25) carries a cam finger (21, 63) and is connected to the movable arch (1, 67) on the interior side of the arm, the arms (17, 42) are held and returned to rest position (Figs. 1 and 2, Figs. 5 and 6) after a braking action (Figs. 3 and 4, Figs. 7 and 8) by metallic compression springs (26) disposed about pins (9, 57), the arms (17, 42) are mounted freely turnably on the trunnions such that the brake in place constitutes a floating assembly, without constraint, whose axis of symmetry in the front view (Fig. 1, Fig. 5) is maintained in the plane of the axis of symmetry and width of the wheel by the brake cable (8, 71) passing through a hole (4, 5, 72) located in the upper and central section of the movable arch (1, 67), when the brake is at rest (Fig. 1, Fig. 5).

3. Mechanical brakes according to claim 1 adapted to be mounted on bicycles, **characterised in that** each brake comprises two identical and reversible arms (75) mounted freely turnably on the trunnions (81), each of the arms (75) carrying at its upper portion the hollow cam (92) pierced perpendicularly relative to the longitudinal axis of the arm by an oblong hole (99) and by a cylindrical recess (107), cam (92) which is turned outwardly of the arm and whose edge bisecting the dihedral is vertical and the recess (107), cam (92) which is turned outwardly of the arm and whose edge bisecting the dihedral is vertical and the flat angle of about 90°, the pin (101) which passes through the cam (92) bears on the outside of the arm (75) a cam finger (96) which is one end of the elbowed branch (94) of the movable arch (93), the arms (75) are held and returned to rest position after a braking action by elastomeric springs (104) disposed about the pins (101), disposed in part in the cylindrical recesses (107), these springs (104) also ensuring the positioning of the pins (101) in the middle of oblong holes (99) in the direction of the height when the brake is at rest, by means of cylindrical recesses (107), the arms (75) are mounted freely turnably on the trunnions (81) such that the brake in place constitutes a floating assembly without constraint, whose axis of symmetry in the front view (Fig. 9) is maintained in the plane of the axis of symmetry as to width of the wheel by the brake cable passing through a hole located in an upper and central position of the movable arch (93) when the brake is at rest (Fig. 9).

4. Mechanical brakes according to claim 1 adapted to be mounted on bicycles, **characterised in that** identical and reversible brake arms (111) are mounted on the trunnions by stays (112) adjustable as to height, and are interconnected in their plane by an arch (110) of metallic rod or plastic material, resiliently deformable as to width, each arm (111) carrying a hollow V-shaped cam (114) turned inwardly of the brake, the ridge bisecting the dihedral being horizontal, the flat angle being about 90°, cam (114) pierced by a hole (148) perpendicular to the longitudinal axis of the arm (111) in which slides a pin (115, 129) in a rectilinear manner, this pin being either (115) provided at its screw threaded end (117) with a cylindrical shoe (122), the cam finger (119) forming a portion of the movable arch (125) or being provided at its screw threaded end (139) with a pad carrier (136) with rectilinear movement, the cam finger (135) being independent, the control of the brake, the holding in position and the resilient return of the pads being ensured by the movable arch (125, 132) prestressed as to width.

5. Mechanical brakes according to claims 1, 2, 3 adapted to be mounted on bicycles, **characterised in that** the movable control arch (67, 93) is in three parts constituted by two elbowed branches (60, 94) of metallic rod connected to the pins (57, 101) by screws (61, 105) permitting adjustment in height of the movable arch (67, 93) relative to the horizontal axis of the pins (57, 101) and by an assembly sleeve (68, 95) connected to the elbowed branches by screws (69, 109) secured to the sleeve (68, 95) permitting adjustment by spacing of the pads (50, 89) relative to the wheel rim, and adjustment of the orientation of the passage hole (72) of the brake cable (71) and an adjustment of the angular position of the upper portion of the movable arch in the plane perpendicular to the axis of rotation of the wheel when the sleeve (95) has a flat portion (83) offset relative to its longitudinal axis, the movable arch (67, 93) being adapted to deform resiliently if the pressure between the pads and the wheel rim is too great.

6. Mechanical brakes according to claims 1 and 2 adapted to be mounted on bicycles, **characterised in that** the movable control arch (1) is of monobloc construction of plastic material, with sections calculated to be able to deform by opening if the pressure between the pads (27) and the wheel rim becomes too great, that it is provided in each springing (3) with a transverse hole of octagonal profile (2), which can be of a toothed profile, which coacts with the octagonal or toothed section (10) of the pin (9) for positioning of its longitudinal axis relative to those of the arms (17) according to the desired mounting (α1, Fig. 2), and **in that** it has two holes (4, 5) for the passage and immobilization of the cable whose choice of mounting the brake depends on the path given by the brake handle, a blocking screw (7) being provided to secure the cable (8) and the movable arch (1), the latter (150) being adapted to be shaped as a blade (151) to scrape mud which clings to the tire.

7. Mechanical brakes according to claims 1, 2, 3, 5 adapted to be mounted on bicycles, **characterised in that** a hollow pad (50, 89) mounted on a cylindrical pad carrier (49, 88) permits the pad (50, 89) to have an automatic orientation parallel to the wheel rim, pad carrier (49, 88) screwed at the screw threaded rounded end (48) of a rod receiving an elastomer ring (52) and a blocking nut (51), rod carried by a rectangular nut (47, 80) guided in translation by the sides (46) of a recess (44) of the brake arm (42) is adjustable in height relative to the wheel rim by a screw (53, 78) secured to the brake arm (42, 75).

8. Mechanical brakes according to claims 1, 2, 3, 5, 7 adapted to be mounted on bicycles, **characterised in that** the nut (80) of each arm (75) serving for the adjustment of the height of the tab (89) relative to the wheel rim with the help of the screw (78) has its sides (85) in contact with the lateral calibrated sides (74) of the chamfered arm (75) and carries a rear portion (84) extending outside the arm, provided with an adjustment screw (100) so as to obtain permanent adjustment of the longitudinal axis of the pad (89) of about 5° relative to the wheel rim, this adjustment being adapted to be automatic in the case of omission of the portion (90).

9. Mechanical brakes according to any one of the claims adapted to be mounted on bicycles, **characterised in that** the cam fingers can be mounted in a keyhole (62, 64) in the pins (57), can be articulated (158) on the pins (155, Fig. 29), can be provided with rollers (154, Fig. 13).

10. Mechanical brakes according to any one of the claims adapted to be mounted on bicycles, **characterised in that** the brake arms (152) are of plastic material provided with metallic linings (153) carrying the cams.

11. Mechanical brakes according to claim 4 adapted to be mounted on bicycles, **characterised in that** the brake is adapted for a disc brake.

## Patentansprüche

1. Mechanische Bremsen mit Bremsschuhen, die dazu vorgesehen sind, an Fahrrädern, vorzugsweise an Mountainbikes, montiert zu werden und das Bremsen mittels Reibung der Bremsschuhe bewirken, **dadurch gekennzeichnet, daß** ein drehbeweglicher Bogen (1, 67, 93, 110, 125, 132, 144), dessen Bewegungsachse parallel zur Drehachse des Rades ist, der sich in Richtung seiner Breite elastisch verformen kann, an seinem oberen und mittleren Abschnitt durch die Wirkung eines Bremsseils (8, 36, 71, 128, 146) und einer mit dem Griff der Bremse (32) verbundenen Umhüllung (35) betätigt wird, an jedem seiner Enden mit einem Zapfen (9, 57, 101, 115, 129, 143), der einen Nockenfinger (21, 63, 96, 119, 135) trägt, welcher in einer vom Zapfen übertragenen Drehbewegung gegen die Flanken (40, 41, 97, 98) eines Hohlnockens (23, 92, 114, 141) wirkt, der mit einer Durchgangsbohrung (24, 99, 142, 148) zur Aufnahme des Zapfens (9, 57, 101, 115, 129, 143) versehen und in Form eines V ausgebildet ist, dessen Planwinkel des Dieders etwa 90° beträgt, abnehmbar verbunden ist, wobei der Nocken über seine Drehbewegung die Betätigung der Bremsschuhe steuert, und wobei das elastische Rückstellsystem (26, 104, 125, 132, 144) der Bremsschuhe auf Höhe der Zapfen (9, 57, 101, 115, 129, 143) angeordnet ist.

2. Mechanische Bremsen nach Anspruch 1, die dazu vorgesehen sind, an Fahrrädern montiert zu werden, **dadurch gekennzeichnet, daß** jede Bremse zwei identische und umdrehbare Arme (17, 42) aufweist, die frei drehbar auf Lagerzapfen (19) montiert sind, wobei jeder der Arme an seinem oberen Abschnitt den hohlen V-förmigen Nocken (23) trägt, der senkrecht zur Längsachse des Armes von einem Langloch (24) und einer zylindrischen Ausnehmung (25) durchsetzt ist, wobei der Nocken (23) zur Außenseite des Armes (17, 42) gewandt ist und seine Dieder-Halbierende horizontal verläuft und dessen Planwinkel etwa 90° beträgt, wobei der Zapfen (9, 57), der über das Langloch (24) und die zylindrische Ausnehmung (25) durch den Nocken (23) hindurchläuft, einen Nockenfinger (21, 63) aufweist und mit dem beweglichen Bogen (1, 67) auf der Innenseite des Armes verbunden ist, wobei die Arme (17, 42) nach einer Bremsbetätigung (Fig. 3 und 4, Fig. 7 und 8) über metallische Druckfedern (26), die um die Zapfen (9, 57) herum angeordnet sind, in der Ruhestellung (Fig. 1 und 2, Fig. 5 und 6) gehalten bzw. in diese zurückgeführt werden, wobei die Arme (17, 42) ferner frei drehbar auf den Lagerzapfen so montiert sind, daß die angebrachte Bremse eine schwimmend angeordnete, spannungsfreie Einheit bildet, deren Symmetrieachse in der Vordersansicht (Fig. 1, Fig. 5) vom Bremsseil (8, 71), das durch ein Loch (4, 5, 72), welches im oberen und mittleren Abschnitt des beweglichen Bogens (1, 67) angeordnet ist, hindurchläuft, in der Breiten-Symmetrieachse des Rades gehalten wird, wenn sich die Bremse im Ruhezustand (Fig. 1, Fig. 5) befindet.

3. Mechanische Bremsen nach Anspruch 1, die dazu vorgesehen sind, an Fahrrädern montiert zu werden, **dadurch gekennzeichnet, daß** jede Bremse zwei identische und umkehrbare Arme (75) umfaßt, die frei drehbar auf Lagerzapfen (81) montiert sind, wobei jeder der Arme (75) in seinem oberen Abschnitt den hohlen Nocken (92) aufweist, durch den senkrecht zur Längsachse des Armes ein Langloch (99) und eine zylindrische Ausnehmung (107) verlaufen, wobei der Nocken (92) zur Außenseite des Schenkels gewandt ist und seine Dieder-Halbierende vertikal verläuft und der Planwinkel etwa 90° beträgt, wobei der Zapfen (101), der durch den Nocken (92) hindurchläuft, an der Außenseite des Armes (75) einen Nockenfinger (96) trägt, bei dem es sich um ein Ende des gebogenen Schenkels (94) des beweglichen Bogens (93) handelt, wobei die Arme (75) nach einer Bremsbetätigung durch Elastomerfedern (104), die um die Zapfen (101) herum angeordnet sind, welche teilweise in den zylindrischen Ausnehmungen (107) aufgenommen sind, in ihrer Ruhestellung gehalten bzw. in diese zurückgeführt werden, wobei diese Federn (104) auch die Positionierung der Zapfen (101) in der Mitte der Langlöcher (99) in Höhenrichtung sicherstellen, wenn sich die Bremse im Ruhezustand befindet, und zwar mittels der zylindrischen Ausnehmungen (107), wobei die Arme (75) frei drehbar auf den Lagerzapfen (81) so montiert sind, daß die angebrachte Bremse eine schwimmend angeordnete, spannungsfreie Einheit bildet, deren Symmetrieachse in der Vorderansicht (Fig. 9) vom Bremsseil, das durch ein in der oberen und mittleren Stellung des beweglichen Bogens (93) angeordnetes Loch hindurchläuft, in der Ebene der Breiten-Symmetrieachse des Rades gehalten wird, wenn sich die Bremse im Ruhezustand befindet (Fig. 9).

4. Mechanische Bremsen nach Anspruch 1, die dazu vorgesehen sind, an Fahrrädern montiert zu werden, **dadurch gekennzeichnet, daß** identische und umkehrbare Bremsarme (111) mittels höhenverstellbarer Tragstücke (112) auf den Lagerzapfen montiert und untereinander in ihrer Ebene über den Bogen (110) aus einem Stab aus Metall oder Kunststoff, der in seiner Breite elastisch verformbar ist, verbunden sind, wobei jeder Arm (111) den V-förmigen Nocken (114), welcher der Innenseite der Bremse zugewandt ist, trägt, wobei die Dieder-Halbierende horizontal verläuft und der Planwinkel etwa 90° beträgt, wobei ferner der Nocken (114), durch den ein Loch (148) senkrecht zur Längsachse des Arms (111), in dem ein Zapfen (115, 129) geradlinig gleitet, hindurchläuft, wobei dieser Zapfen entweder (115) an seinem Gewindeende (117) mit einem zylindrischen Bremsschuh (122) versehen sein kann, wobei der Nockenfinger (119) Teil des beweglichen Bogens (125) ist, oder (129) an seinem Gewindeende (139) mit einem Bremsschuhhalter (136) zur geradlinigen Verschiebung versehen sein kann, wobei der Nockenfinger (135) unabhängig ist und die Steuerung der Bremse, das Haltern und die elastische Rückstellung der Bremsschuhe durch den beweglichen Bogen (125, 132) sichergestellt sind, der in Breitenrichtung hin vorgespannt ist.

5. Mechanische Bremsen nach den Ansprüchen 1, 2, 3, wobei die Bremsen dazu vorgesehen sind, an Fahrrädern montiert zu werden, **dadurch gekennzeichnet, daß** der bewegliche Steuerbogen (67, 93) aus drei Teilen besteht, die zwei gebogene Arme (60, 94) aus einer mit den Zapfen (57, 101) über Schrauben (61, 105) verbundenen Metallstange, die eine Höhenverstellung des beweglichen Bogens (67, 93) relativ zur horizontalen Achse der Zapfen (57, 101) gestattet, und einen Montageschaft (68, 95) umfassen, der mit den gebogenen Armen über Schrauben (69, 109) verbunden ist, die einstückig mit dem Schaft (68, 95) ausgebildet sind und eine Abstandseinstellung der Bremsschuhe (50, 89) relativ zur Felge, eine Einstellung der Ausrichtung der Durchgangsbohrung (72) für das Bremsseil (71) und eine Einstellung der Winkelstellung des beweglichen Bogens von oben in der senkrecht zur Drehachse des Rades verlaufenden Ebene gestattet, wenn der Schaft (95) einen flachen Abschnitt (83) aufweist, der relativ zu seiner Längsachse versetzt ist, wobei sich der bewegliche Bogen (67, 93) elastisch verformen kann, wenn der Druck zwischen den Bremsschuhen und der Felge zu groß ist.

6. Mechanische Bremsen nach den Ansprüchen 1 und 2, wobei die Bremsen dazu vorgesehen sind, an Fahrrädern montiert zu werden, **dadurch gekennzeichnet, daß** der bewegliche Steuerbogen (1) einstückig aus Kunststoff ausgebildet ist mit Abschnitten, die dazu ausgelegt sind, sich verformen zu können, indem sie sich öffnen, wenn der Druck zwischen den Bremsschuhen (27) und der Felge zu groß wird, daß der Bogen in jedem Rücksprung (3) mit einem Querloch (2) mit achteckigem Profil versehen ist, bei dem es sich um ein gezahntes Profil handeln kann, welches mit dem achteckigen oder gezahnten Abschnitt (10) des Zapfens (9) zur Positionierung seiner Längsachse relativ zu denen der Arme (17) entsprechend der gewünschten Montage (α1, Fig. 2) zusammenwirkt, und daß er zwei Löcher (4, 5) zum Hindurchführen und zum Immobilisieren des Seils aufweist, dessen Wahl bei der Montage der Bremse von dem Verlauf abhängt, der durch den Bremsgriff vorgegeben ist, und daß eine Verriegelungsschraube (7) vorgesehen ist, um das Seil (8) fest mit dem beweglichen Bogen (1) zu verbinden, welcher (150) in Form eines Messers (151) zugeschnitten sein kann, um am Reifen anhaftenden Schmutz abzustreifen.

7. Mechanische Bremsen nach den Ansprüchen 1, 2, 3, 5, wobei die Bremsen dazu vorgesehen sind, an Fahrrädern montiert zu werden, **dadurch gekennzeichnet, daß** ein hohler Bremsschuh (50, 89), der auf einem zylindrischen Bremsschuh-Halter (49, 88) montiert ist, welcher eine automatische Ausrichtung des Bremsschuhs (50, 89) parallel zur Felge erlaubt, wobei der Bremsschuh-Halter (49, 88), der an das abgerundete Gewindeende (48) einer Stange angeschraubt ist, die eine Elastomerscheibe (52) und eine Feststellmutter (51) aufnimmt, wobei die Stange von einer rechteckigen Schraubmutter (47, 80) getragen wird, die von den Seiten (46) einer Ausnehmung (44) des Bremsarms (42) in Translation geführt wird und relativ zur Felge über eine mit dem Bremsarm (42, 75) verbundene Schraube (53, 78) relativ zur Felge höhenverstellbar ist.

8. Mechanische Bremsen nach den Ansprüchen 1, 2, 3, 5, 7, wobei die Bremsen dazu vorgesehen sind, an Fahrrädern montiert zu werden, **dadurch gekennzeichnet, daß** die Mutter (80) jedes Arms (75), der zur Höhenverstellung des Bremsschuhs (89) relativ zur Felge mittels der Schraube (78) dient, an ihren Seiten (85) in Kontakt mit den kalibrierten schrägen Seitenflächen (74) des Arms (75) steht, und einen hinteren Teil (84) aufweist, der aus dem Arm nach außen vorsteht und mit einer Einstellschraube (100) versehen ist, um eine dauerhafte Verstellung der Längsachse des Bremsschuhs (89) von etwa 5° relativ zur Felge zu erhalten, wobei diese Verstellung für den Fall, daß der Teil (90) weggelassen ist, automatisch erfolgen kann.

9. Mechanische Bremsen nach einem der Ansprüche, wobei die Bremsen dazu vorgesehen sind, an Fahrrädern montiert zu werden, **dadurch gekennzeichnet, daß** die Nockenfinger in einer Keilnut (62, 64) der Stifte (57) montiert, an den Stiften (155, Fig. 29) angelenkt (158) oder mit Rollen (154, Fig. 13) versehen sein können.

10. Mechanische Bremsen nach einem der Ansprüche, wobei die Bremsen dazu vorgesehen sind, an Fahrrädern montiert zu werden, **dadurch gekennzeichnet, daß** die Bremsarme (152) aus Kunststoff gefertigt sind, der mit die Nocken tragenden Metallverkleidungen (153) versehen ist.

11. Mechanische Bremsen nach Anspruch 4, die dazu vorgesehen sind, an Fahrrädern montiert zu werden, **dadurch gekennzeichnet, daß** die Bremse an eine Scheibenbremse angepaßt ist.
